# EUROPÄISCHE PATENTSCHRIFT

(11) **EP 0 553 095 B1**
(45) Veröffentlichungstag und Bekanntmachung des Hinweises auf die Patenterteilung: **24.01.1996**
(21) Anmeldenummer: 91914049.1
(22) Anmeldetag: 08.08.1991
(51) Int. Cl.: F16F 15/12

(54) **DREHSCHWINGUNGSTILGER**
TORSIONAL-VIBRATION DAMPER
AMORTISSEUR DE VIBRATIONS TORSIONNELLES

(30) Priorität: 16.08.1990 DE 4025848
(43) Veröffentlichungstag der Anmeldung: 04.08.1993
(73) Patentinhaber: PAGUAG GmbH & Co., D-40472 Düsseldorf (DE)
(72) Erfinder: WAGNER, Bernd, D-4000 Düsseldorf 1 (DE)
(74) Vertreter: Lippert, Hans-Joachim, Dipl.-Ing.
(86) Internationale Anmeldenummer: DE9100635
(87) Internationale Veröffentlichungsnummer: WO9203669

(56) Entgegenhaltungen:
- DE-U- 7 604 193
- US-A- 3 670 593
- Patent Abstracts of Japan, vol. 12, No. 73 (M-674) (2920) 8 March 1988 & JP-A-62215145 (TOYOTA MOTOR CORP) 21 September 1987, see abstract
- Patent Abstracts of Japan, vol. 7, No. 269 (M-259) (1414) 30 November 1983 & JP-A-58146745 (ENU 00 KEE MEGURASUTEITSUKU K.K.) 1st September 1983, see abstract

## Beschreibung

Die Erfindung betrifft einen Drehschwingungstilger für Kolbenmotoren, insbesondere für Kraftfahrzeugmotoren, mit einer auf der Kurbelwelle des Motors drehfest montierbaren Nabe, einem die Nabe konzentrisch umgebenden ersten Schwungring, der über eine in Umfangsrichtung wirksame Gummifedereinrichtung mit der Außenfläche der Nabe verbunden ist, sowie einem zweiten ebenfalls zur Nabe konzentrischen Schwungring, der radial außerhalb des ersten Schwungrings angeordnet und über eine ebenfalls in Umfangsrichtung wirksame Gummifedereinrichtung unmittelar oder mittelbar an der Nabe befestigt ist.

Bekannte Drehschwingungstilger der genannten Art, die unmittelbar auf dem Ausgangsende der Kurbelwelle befestigt werden, dienen zur Tilgung der massenkrafterregten Schwingungen des Motors. Diese massenkrafterregten Schwingungen des Motors liegen je nach Bauweise in der Größenordnung von etwa 150 Hz bis 650 Hz.

Um dieses gesamte Spektrum abzudecken, werden mehrere relativ zueinander bewegliche Schwungringe miteinander kombiniert. Bei einem bekannten Drehschwingungstilger der genannten Art (DE-OS 36 08 420) werden beispielsweise kleinere Schwungringe, die im Inneren der Nabe gelagert werden, mit dem Hauptschwungring über Gummifedereinrichtungen verbunden.

Die niederfrequenten, gaskrafterregten Schwingungen, die in der Größenordnung von etwa 40 Hz bis 100 Hz liegen, werden bei bekannten Anlagen durch zusätzliche Drehschwingungstilger gedämpft, die am Ende der Kardanwelle angebracht werden.

Bei einem anderen bekannten Schwingungstilger (US-A-3 670 593) ist der innere Schwungring über eine Gummifeder an der Nabe befestigt und der äußere Schwungring ist über eine weitere Gummifeder mit dem inneren Schwungring verbunden. Die Gummifedern können dabei in ihrer Länge sowie in ihren Eigenschaften in Anpassung an die jeweilige Aufgabenstellung variiert werden. Diese bekannte Konstruktion funktioniert aber nur dann einwandfrei, wenn der äußere Schwungring relativ zu dem inneren Schwungring eine wesentlich kleinere Masse aufweist, da andernfalls das System instabil würde. Insofern ist das bekannte Tilgersystem in Bezug auf die abzudeckenden Frequenzen äußerst unflexibel und insbesondere dürften Schwierigkeiten bei der Tilgung im Niederfreqenzbereich auftreten.

Ausgehend von diesem Stand der Technik liegt der Erfindung die Aufgabe zugrunde, den bekannten Schwingungstilger dahingehend zu modifizieren, daß sämtliche bei einem Motor auftretenden Frequenzen, insbesondere die gaskrafterregten niederfrequenten Schwingungen zuverlässig getilgt werden können.

Erfindungsgemäß wird diese Aufgabe dadurch gelöst, daß die den ersten Schwungring tragende Gummifedereinrichtung hart eingestellt ist, daß die den ersten Schwungring tragende Gummifedereinrichtung hart eingestellt ist, und daß der äußere Schwungring mittels eines Drehlagers frei drehbar auf dem inneren Schwungring gelagert ist.

Durch diese erfindungsgemäße Konstruktion ist es möglich, den äußeren Schwungring gezielt auf dem inneren Schwungring, der über die hart eingestellte Gummifeder relativ stabil an der Nabe sitzt, zu führen, während gleichzeitig die den zweiten Schwungring tragende Gummifedereinrichtung weich eingestellt ist. Dabei ist man in Bezug auf die Abstimmung der Massen völlig frei, so daß ohne weiteres auch der äußere Schwungring mit der größeren Masse ausgestattet werden kann. Auf diese Weise läßt sich auch das gesamte Spektrum der gaskrafterregten Schwingungen mit abdecken, so daß sämtliche in dem Motor erzeugten Schwingungen bereits an der Kurbelwelle mit einem einzigen Aggregat gedämpft werden können. Die Schwingungen werden also unmittelbar dort bekämpft, wo sie entstehen. Die Anbringung eines zweiten Aggregats zur Tilgung der Niederfrequenzschwingungen ist somit überflüssig. Der erfindungsgemäße Drehschwingungstilger ist also nicht nur einfach im Aufbau sondern bewirkt auch, daß sich die Niederfrequenzschwingungen gar nicht erst auf die folgenden Aggregate der Anlage übertragen.

Vorzugsweise ist zwischen dem äußeren Schwungring und dem inneren Schwungring als Drehlager eine Gleitbuchse angeordnet. Dadurch wird die Beweglichkeit des äußeren Schwungringes auf dem inneren Schwungring noch verbessert.

Um bei Motoren, wo die niederfrequenten Schwingungen den größeren Anteil darstellen, diese nahezu restlos zu tilgen,weist der äußere Schwungring vorzugsweise ein größeres Massenträgheitsmoment auf, als der innere Schwungring.

Um die den äußeren Schwungring tragende Gummifedereinrichtung besonders weich einstellen zu können, kann diese Gummifedereinrichtung in Umfangsrichtung mehrfach in gleichen Abständen unterbrochen sein.

Die Konstruktion des erfindungsgemäßen Drehschwingungstilgers kann so ausgelegt sein, daß die beiden Schwungringe über ihre Gummifedereinrichtungen direkt an der Nabe sitzen, also parallel geschaltet sind. Dabei kann der äußere Schwungring über seine Gummifedereinrichtung an einem radial vorspringenden Flansch der Nabe befestigt sein.

Alternativ ist es aber auch möglich, eine Reihenschaltung der Schwungringe vorzusehen, indem der äußere Schwungring über seine Gummifedereinrichtung am äußeren Bereich des inneren Schwungringes befestigt ist.

Die den äußeren Schwungring tragende Gummifedereinrichtung besteht vorzugsweise aus einem vulkanisiert gehafteten Elastomer geringen G-Moduls.

Der innere Schwungring ist vorzugsweise über eine rundum laufende, durchgehende Gummispur mit der Nabe verbunden.

Die den inneren Schwungring tragende Gummifedereinrichtung besteht vorzugsweise aus einem ungehafteten, vorgespannten Elastomer hohen G-Moduls.

Damit der relativ große äußere Schwungring sauber geführt werden kann, ist dieser zweckmäßig drehbar auf dem inneren Schwungring gelagert. Zwischen dem äußeren und inneren Schwungring kann dabei in deren Lagerbereich eine Gleitbuchse angeordnet sein.

Die Nabe besteht zweckmäßig aus einem leichten Material, wie Aluminium oder Kunststoff, und weist zur Befestigung an der Kurbelwelle ein eingegossenes Stahl-, Grauguß oder Blechteil auf.

Darüber hinaus kann die Nabe auf der den Schwungringen abgewandten Seite einen Axialflansch aufweisen, der als Keilriemenrad ausgebildet bzw. mit einem aufgesetzten Keilriemenrad versehen ist.

Die Erfindung ist in der Zeichung beispielsweise ver-anschaulicht und im nachstehenden im einzelnen anhand der Zeichnung beschrieben. Es zeigen:
- Fig. 1: die Ansicht einer Hälfte eines Drehschwingungstilgers,
- Fig. 2: einen Schnitt entlang der Linie II-II aus Fig. 1 und
- Fig. 3: einen Schnitt ähnlich wie Fig. 2 durch ein anderes Ausführungsbeispiel eines Drehschwingungstilgers.

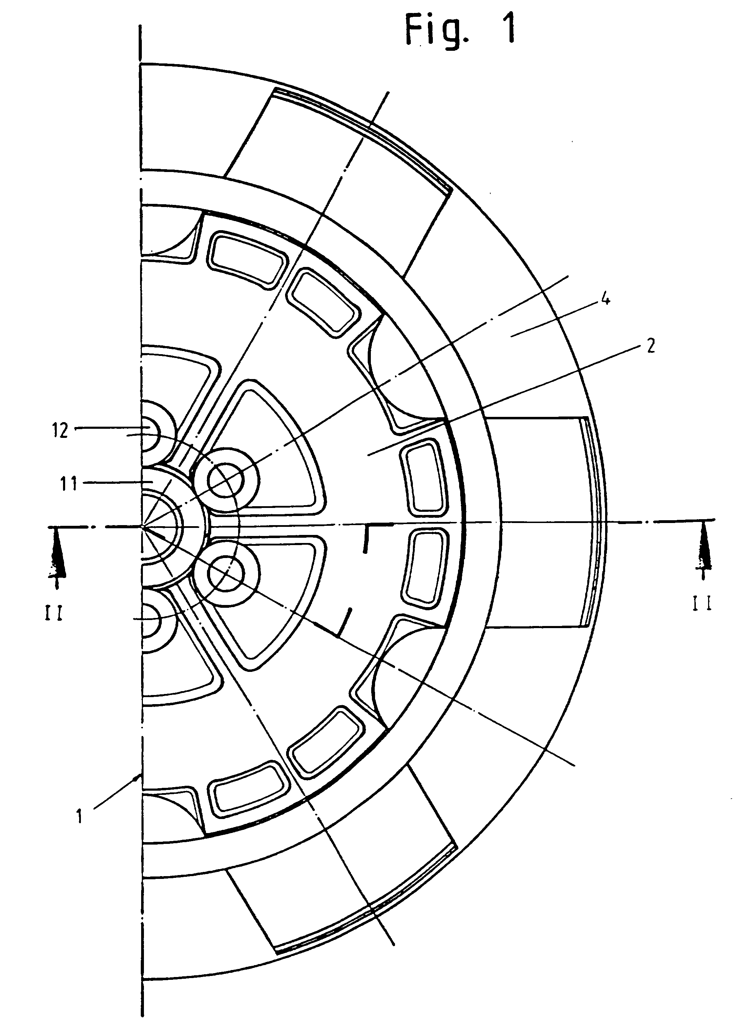

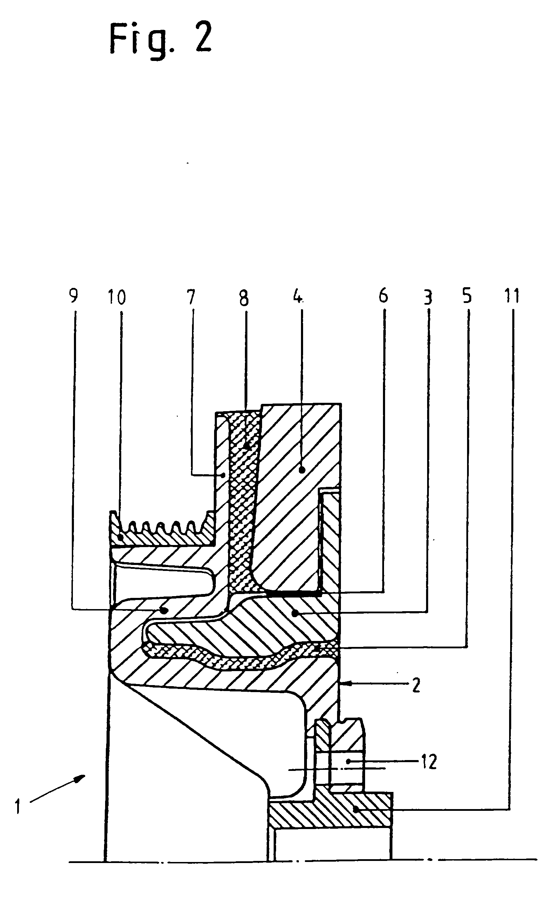

Nach Fig. 1 und 2 der Zeichung besteht der Drehschwingungstilger 1 aus einer Nabe 2, einem inneren Schwungring 3 sowie einem äußeren Schwungring 4.

Der innere Schwungring 3 ist über eine hart eingestellte, in Umfangsrichtung wirksame Gummifedereinrichtung 5 mit der Außenfläche der Nabe 2 verbunden.

Die den inneren Schwungring 3 tragende Gummifedereinrichtung 5 besteht dabei aus einem ungehafteten, vorgespannten Elastomer mit einem hohen G-Modul.

Der äußere Schwungring 4 weist ein größeres Massenträgheitsmoment auf als der innere Schwungring 3 und ist über eine Gleitbuchse 6 unmittelbar auf einer äußeren Umfangsfläche des inneren Schwungrings 3 drehbar gelagert.

Die Nabe 2 ist mit einem radial vorspringenden Flansch 7 versehen, mit welchem der äußere Schwungring 4 über eine weich eingestellte, in Umfangsrichtung wirksame Gummifedereinrichtung 8 verbunden ist. Die Gummifedereinrichtung 8 ist in Umfangsrichtung mehrfach in gleichmäßigen Abständen unterbrochen und besteht aus einem vulkanisiert gehafteten Elastomer mit geringem G-Modul.

Der den äußeren Schwungring 4 tragende Radialflansch 7 der Nabe 2 weist auf seiner den Schwungringen 3 und 4 abgewandten Seite einen Axialflansch 9 auf, der mit einem aufgesetzten Keilriemenrad 10 versehen ist.

Die Nabe 2 besteht aus leichtem Material, wie Aluminium oder Kunststoff. Zur Befestigung der Nabe an einer in der Zeichnung nicht dargestellten Kurbelwelle ist die Nabe mit einem Eingußstück 11 aus härterem Material versehen, beispielsweise aus Stahl- oder Grauguß.

Zur Befestigung des Drehschwingungstilgers 1 auf der Kurbelwelle ist die Nabe mit in gleichmäßigen Winkel-abständen verteilt angeordneten Axialbohrungen 12 versehen, die sich sowohl durch das Material der Nabe 2 als auch durch das Eingußstück 11 erstrecken. Durch die Axialbohrungen 12 werden Schrauben hindurchgesteckt, die in Gewindebohrungen eines an der Kurbelwelle sitzenden Radialflanschs eingedreht werden.

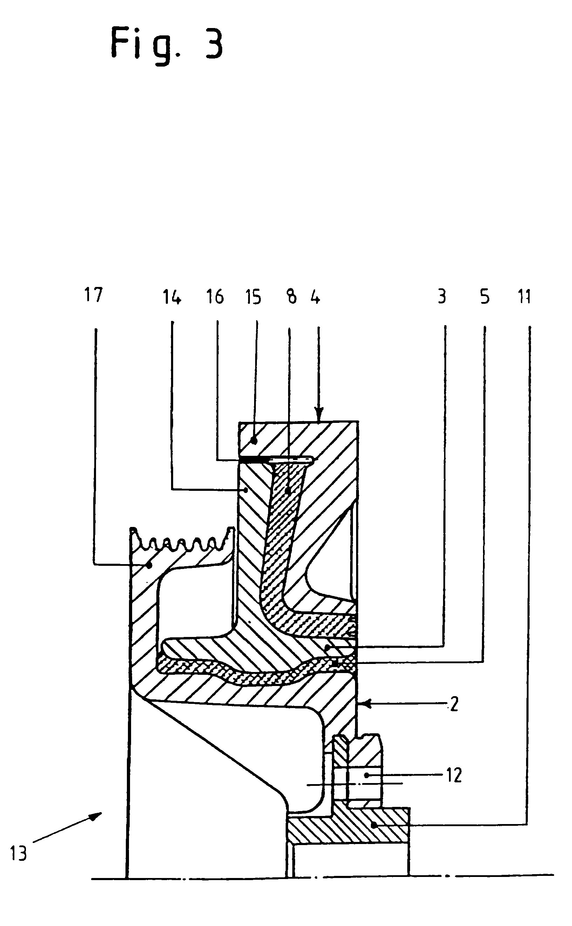

Bei dem in Fig. 3 dargestellten Ausführungsbeispiel weist der Drehschwingungstilger 13 annähernd die gleichen äußeren Abmessungen auf, wie der in Fig. 1 und 2 dargestellte Drehschwingungstilger 1. Aus Gründen der Übersichtlichkeit sind gleiche Teile mit gleichen Positionszahlen gekennzeichnet worden.

Im Unterschied zu dem in Fig. 1 und 2 dargestellten Ausführungsbeispiel sitzt der äußere Schwungring 4 des Drehschwingungstilgers 13 nicht an einem Flansch der Nabe 2, sondern seine Gummifedereinrichtung 8 ist am äußeren Bereich des inneren Schwungrings 3 befestigt.

Der innere Schwungring 3 ist mit einem Radialflansch 14 versehen, auf dessen äußerer Umfangsfläche die Innenseite eines Axialflanschs 15 des äußeren Schwungrings 4 über eine Gleitbuchse 16 gelagert ist.

Die den äußeren Schwungring 4 tragende Gummifedereinrichtung 8 besteht ebenso wie bei dem in Fig. 1 und 2 dargestellten Ausführungsbeispiel aus einem vulkanisiert gehafteten Elastomer mit geringem G-Modul. Die Gummifedereinrichtung 8, die mehrfach in gleichmäßigen Abständen unterbrochen sein kann, haftet sowohl an der Innenfläche des äußeren Schwungrings 4 als auch am äußeren Umfang des inneren Schwungrings 3 und an der zugewandten Seitenfläche des an dem inneren Schwungring 3 vorgesehenen Radialflanschs 14.

Auch bei diesem Ausführungsbeispiel besteht die Nabe 2 aus einem leichten Material, welches zur Befestigung an einer in der Zeichnung nicht dargestellten Kurbelwelle ein Eingußstück 11 aufweist.

Die Nabe 2 ist bei diesem Ausführungsbeispiel mit einem einstückig angeformten Keilriemenrad 17 versehen.

### Bezugszeichenliste

- 1: Drehschwingungstilger
- 2: Nabe
- 3: innerer Schwungring
- 4: äußerer Schwungring
- 5: Gummifedereinrichtung des inneres Schwungrings
- 6: Gleitbuchse
- 7: Radialflansch der Nabe
- 8: Gummifedereinrichtung des äußeren Schwungrings
- 9: Axialflansch des Nabe
- 10: Keilriemenrad
- 11: Eingußstück
- 12: Axialbohrungen
- 13: Drehschwingungstilger
- 14: Radialflansch des inneren Schwungrings
- 15: Axialflansch des äußeren Schwungrings
- 16: Gleitbuchse
- 17: Keilriemenrad

## Patentansprüche

1. Drehschwingungstilger (1) für Kolbenmotoren, insbesondere für Kraftfahrzeugmotoren, mit einer auf der Kurbelwelle des Motors drehfest montierbaren Nabe (2), einem die Nabe (2) konzentrisch umgebenden ersten Schwungring (3), der über eine in Umfangsrichtung wirksame Gummifedereinrichtung (5) mit der Außenfläche der Nabe (2) verbunden ist, sowie einem zweiten ebenfalls zur Nabe (2) konzentrischen Schwungring (4), der radial außerhalb des ersten Schwungringes (3) angeordnet und über eine ebenfalls in Umfangsrichtung wirksame Gummifedereinrichtung (8) unmittelbar oder mittelbar an der Nabe (2) befestigt ist, **dadurch gekennzeichnet,** daß die den ersten Schwungring (3) tragende Gummifedereinrichtung (5) hart eingestellt ist, daß die den zweiten Schwungring (4) tragende Gummifedereinrichtung (8) weich eingestellt ist, und daß der äußere Schwungring (4) mittels eines Drehlagers frei drehbar auf dem inneren Schwungring (3) gelagert ist.

2. Drehschwingungstilger nach Anspruch 1, **dadurch gekennzeichnet,** daß zwischen dem äußeren Schwungring (4) und dem inneren Schwungring (3) als Drehlager eine Gleitbuchse (6;16) angeordnet ist.

3. Drehschwingungstilger nach Anspruch 1 oder 2, **dadurch gekennzeichnet,** daß der äußere Schwungring (4) ein größeres Massenträgheitsmoment aufweist als der innere Schwungring (3).

4. Drehschwingungstilger nach einem der Ansprüche 1 bis 3, **dadurch gekennzeichnet,** daß die den äußeren Schwungring (4) tragende Gummifedereinrichtung (8) in Umfangsrichtung mehrfach in gleichmäßigen Abständen unterbrochen ist.

5. Drehschwingungstilger nach einem der Ansprüche 1 bis 4, **dadurch gekennzeichnet,** daß der äußere Schwungring (4) über seine Gummifedereinrichtung (8) an einem radial vorspringenden Flansch (7) der Nabe (2) befestigt ist.

6. Drehschwingungstilger nach einem der Ansprüche 1 bis 4, **dadurch gekennzeichnet,** daß der äußere Schwungring (4) über seine Gummifedereinrichtung (8) am äußeren Bereich des inneren Schwungringes (3) befestigt ist.

7. Drehschwingungstilger nach einem der Ansprüche 1 bis 6, **dadurch gekennzeichnet,** daß die den äußeren Schwungring (4) tragende Gummifedereinrichtung (8) aus einem vulkanisiert gehafteten Elastomer G-Moduls besteht.

8. Drehschwingungstilger nach einem der Ansprüche 1 bis 7, **dadurch gekennzeichnet,** daß der innere Schwungring (3) über eine rundum laufende, durchgehende Gummispur mit der Nabe (2) verbunden ist.

9. Drehschwingungstilger nach einem der Ansprüche 1 bis 8, **dadurch gekennzeichnet,** daß die den inneren Schwungring (3) tragende Gummifedereinrichtung (5) aus einem ungehafteten, vorgespannten Elastomer hohen G-Moduls besteht.

10. Drehschwingungstilger nach einem der Ansprüche 1 bis 9, **dadurch gekennzeichnet,** daß die Nabe (2) aus einem leichten Material besteht und zur Befestigung an einer Kurbelwelle ein eingegossenes Stahl-, Grauguß oder Blechteil (11) enthält.

11. Drehschwingungstilger nach einem der Ansprüche 1 bis 10, **dadurch gekennzeichnet,** daß die Nabe (2) auf der den Schwungringen (3,4) abgewandten Seite einen Axialflansch aufweist, der als Keilriemenrad (17) ausgebildet bzw. mit einem aufgesetzten Keilriemenrad (10) versehen ist.

## Claims

1. Torsional vibration damper (1) for piston engines, particularly for motor vehicle engines, with a hub (2) which can be mounted in a torsionally resistant manner on the crankshaft of the engine, a first flyring (3) which concentrically surrounds the hub (2) and is connected to the outer surface of the hub (2) via a rubber spring device (5) acting in the peripheral direction, as well as an also the hub concentrically surrounding second flyring (4) which is located radially outside the first flyring (3) and which is directly or indirectly secured to the hub (2) via a rubber spring device (8), again acting in the peripheral direction, **characterized in that** the rubber spring device (5) bearing the first flyring (3) is rigid, that the rubber spring device (8) bearing the second flyring (4) is flexible and that the outer flyring (4) is mounted on the inner flyring (3) in free rotating fashion via a pivot bearing.

2. Torsional vibration damper according to claim 1, **characterized in that** as pivot bearing a sliding bush (6; 16) is located between the outer flyring (4) and the inner flyring (3).

3. Torsional vibration damper according to claim 1 or 2, **characterized in that** the outer flyring (4) has a greater mass moment of inertia than the inner flyring (3).

4. Torsional vibration damper according to one of claims 1 to 3, **characterized in that** the rubber spring device (8) bearing the outer flyring (4) has multiple breaks at regular intervals in the peripheral direction.

5. Torsional vibration damper according to one of claims 1 to 4, **characterized in that** the outer flyring (4) is secured via its rubber spring device (8) to a radially projecting flange (7) of the hub (2).

6. Torsional vibration damper according to one of claims 1 to 4, **characterized in that** the outer flyring (4) is secured via its rubber spring device (8) to the outer area of the inner flyring (3).

7. Torsional vibration damper according to one of claims 1 to 6, **characterized in that** the rubber spring device (8) bearing the outer flyring (4) is made of a bonded elastomer with a low modulus of shear.

8. Torsional vibration damper according to one of claims 1 to 7, **characterized in that** the inner flyring (3) is connected to the hub (2) via an all-round, continuous layer.

9. Torsional vibration damper according to one of claims 1 to 8, **characterized in that** the rubber spring device (5) bearing the inner flyring (3) is made of a non-bonded, pretensioned elastomer with a high modulus of shear.

10. Torsional vibration damper according to one of claims 1 to 9, **characterized in that** the hub (2) is made of a lightweight material and includes an integrally moulded part (11) made of steel, grey cast iron or sheet metal for mounting on a crankshaft.

11. Torsional vibration damper according to one of claims 1 to 10, **characterized in that** the side of the hub (2) facing away from the flyrings (3,4) has an axial flange which is designed as a V-belt pulley (17) or is fitted with an attached V-belt pulley (10).

## Revendications

1. Amortisseur de vibrations torsionnelles (1) pour moteurs à pistons, en particulier pour moteurs de véhicules automobiles, comprenant un moyeu (2) qui peut être monté sans possibilité de rotation sur le vilebrequin du moteur, une premier anneau-volant (3) qui entoure concentriquement le moyeu (2) et qui est relié à la surface extérieure du moyeu (2) par un dispositif à ressort en caoutchouc (5) agissant en direction circonférentielle, ainsi qu'un second anneau-volant (4) qui est également concentrique au moyeu (2), est disposé à l'extérieur du premier anneau-volant (3) en direction radiale et est fixé directement ou indirectement au moyeu (2) par un dispositif à ressort en caoutchouc (8) agissant également en direction circonférentielle, caractérisé en ce que le dispositif à ressort en caoutchouc (5) qui porte le premier anneau-volant (3) est réglé à l'état dur, en ce que le dispositif à ressort en caoutchouc (8) qui porte le second anneau-volant (4) est réglé à l'état mou et en ce que l'anneau-volant externe (4) est monté de manière à pouvoir tourner librement sur l'anneau-volant interne (3) au moyen d'un coussinet de pivotement.

2. Amortisseur de vibrations torsionnelles selon la revendication 1, caractérisé en ce qu'une douille de glissement (6; 16) est disposée en tant que coussinet de pivotement entre l'anneau-volant externe (4) et l'anneau-volant interne (3).

3. Amortisseur de vibrations torsionnelles selon la revendication 1 ou 2, caractérisé en ce que l'anneau-volant externe (4) présente un moment d'inertie de masse plus grand que l'anneau-volant interne (3).

4. Amortisseur de vibrations torsionnelles selon l'une quelconque des revendications 1 à 3, caractérisé en ce que le dispositif à ressort en caoutchouc (8) qui porte l'anneau-volant externe (4) est interrompu plusieurs fois à intervalles égaux dans la direction circonférentielle.

5. Amortisseur de vibrations torsionnelles selon l'une quelconque des revendications 1 à 4, caractérisé en ce que l'anneau-volant externe (4) est fixé, par son dispositif à ressort en caoutchouc (8), à une bride (7) du moyeu (8) faisant saillie radialement.

6. Amortisseur de vibrations torsionnelles selon l'une quelconque des revendications 1 à 4, caractérisé en ce que l'anneau-volant externe (4) est fixé, par son dispositif à ressort en caoutchouc (8), à la région extérieure de l'anneau-volant interne (3).

7. Amortisseur de vibrations torsionnelles selon l'une quelconque des revendications 1 à 6, caractérisé en ce que le dispositif à ressort en caoutchouc (8) qui porte l'anneau-volant externe (4) est fait d'un élastomère de module G fixé par vulcanisation.

8. Amortisseur de vibrations torsionnelles selon l'une quelconque des revendications 1 à 7, caractérisé en ce que l'anneau-volant interne (3) est relié au moyeu (2) par une couche continue en caoutchouc, s'étendant tout autour.

9. Amortisseur de vibrations torsionnelles selon l'une quelconque des revendications 1 à 8, caractérisé en ce que le dispositif à ressort en caoutchouc (5) qui porte l'anneau-volant interne (3) est fait d'un élastomère de module G élevé précontraint, non fixé.

10. Amortisseur de vibrations torsionnelles selon l'une quelconque des revendications 1 à 9, caractérisé en ce que le moyeu (2) est fait d'un matériau léger et contient, pour sa fixation à un vilebrequin, une pièce d'acier, de fonte grise ou de tôle (11) encastrée.

11. Amortisseur de vibrations torsionnelles selon l'une quelconque des revendications 1 à 10, caractérisé en ce que le moyeu (2) comporte, du côté situé à l'opposé des anneaux-volants (3,4), une bride axiale qui est réalisée sous forme de poulie à gorge pour courroie trapézoïdale (17) ou qui est munie d'une poulie rapportée à gorge pour courroie trapézoïdale (10).
